(19) Europäisches Patentamt
European Patent Office
Office européen des brevets

(11) EP 4 765 745 A1

(12) **EUROPEAN PATENT APPLICATION**
published in accordance with Art. 153(4) EPC

(43) Date of publication:
**24.06.2026 Bulletin 2026/26**

(21) Application number: 23950229.7

(22) Date of filing: **31.08.2023**

(51) International Patent Classification (IPC):
*H04L 25/02* (2006.01)

(52) Cooperative Patent Classification (CPC):
H04L 25/02

(86) International application number:
**PCT/CN2023/116301**

(87) International publication number:
**WO 2025/043646 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen, Guangdong 518129 (CN)**

(72) Inventors:
• **JIANG, Chenglong**
**Shenzhen, Guangdong 518129 (CN)**

• **BI, Xiaoyan**
**Shenzhen, Guangdong 518129 (CN)**
• **JIANG, Yisheng**
**Shenzhen, Guangdong 518129 (CN)**
• **LIU, Yong**
**Shenzhen, Guangdong 518129 (CN)**
• **LIU, Lei**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **CHANNEL ESTIMATION METHOD, AND COMMUNICATION APPARATUS**

(57) This application provides a channel estimation method and a communication apparatus. The method includes: receiving first information, where the first information indicates a manifold-based channel estimation policy, the first information is associated with a channel state corresponding to a channel used to transmit a reference signal, and the reference signal is used for channel estimation; and determining the manifold-based channel estimation policy based on the first information. In this way, the manifold-based channel estimation policy is determined based on the channel state, so that channel estimation can be flexibly performed based on different channel states, and channel estimation performance can be improved.

200

FIG. 2

**Description**

**TECHNICAL FIELD**

Embodiments of this application relate to the field of wireless communication technologies, and more specifically, to a channel estimation method and a communication apparatus.

**BACKGROUND**

A multiple-input multiple-output (multiple-input multiple-output, MIMO) technology is one of key technologies in 5th generation (5th Generation, 5G) communication and future communication. In the MIMO technology, to send and receive data, implement system synchronization, and feed back channel information, it is very important to estimate an uplink channel or a downlink channel, and channel estimation may be performed in a plurality of channel estimation manners. In manifold-based channel estimation, it is assumed that a change of a channel between two adjacent known channel vectors can be described by using a geodesic line formula, that is, the two known channel vectors and a channel vector between the two known channel vectors are located on one geodesic line. A conventional geodesic line can be represented by a series of arcs with different radii. How to apply different channel states during manifold-based channel estimation is a problem worth studying.

**SUMMARY**

This application provides a channel estimation method. The channel estimation method is used to determine a manifold-based channel estimation policy based on a channel state, so that channel estimation can be flexibly performed based on different channel states, and channel estimation performance can be improved.

According to a first aspect, a channel estimation method is provided. The method may be performed by a first device, or may be performed by a component (for example, a chip or a circuit) of the first device. This is not limited. For ease of description, the following uses an example in which the method is performed by the first device for description.

The method may include: receiving first information, where the first information indicates a manifold-based channel estimation policy, the first information is associated with a channel state corresponding to a channel used to transmit a reference signal, and the reference signal is used for channel estimation; and determining the manifold-based channel estimation policy based on the first information. In the foregoing solution, channel estimation is performed based on the manifold-based channel estimation policy indicated by the first information, so that channel estimation can be flexibly performed based on different channel states, thereby improving channel estimation performance.

In a possible implementation, the method further includes: sending capability information, where the capability information indicates that the first device has a manifold-based channel estimation capability.

In the foregoing solution, when the first device has the manifold-based channel estimation capability, the first device reports the capability information of the first device, so that a second device can determine the manifold-based channel estimation policy for the first device.

In a possible implementation, the first information is in a one-to-one correspondence with a channel vector group in frequency domain, the reference signal corresponds to at least one channel vector group, and the channel vector group includes at least two vectors; and/or the first information is in a one-to-one correspondence with a port corresponding to the reference signal in space domain.

In the foregoing solution, different channel vector groups can correspond to different first information, and/or different ports for sending reference signals can correspond to different first information. In this way, channel estimation can be more flexibly performed on different channels. In a possible implementation, the manifold-based channel estimation policy is used to determine at least one interpolated channel vector corresponding to the reference signal.

In a possible implementation, the at least one piece of first information is in a one-to-one correspondence with the at least one manifold-based channel estimation policy.

In the foregoing solution, different first information corresponds to different manifold-based channel estimation policies, so that channel estimation can be more flexibly performed on different channels.

In a possible implementation, the method further includes: performing channel estimation based on the manifold-based channel estimation policy.

In the foregoing solution, the first device can perform channel estimation based on the manifold-based channel estimation policy corresponding to the indicated first information, to better adapt to a channel state and improve channel estimation performance.

In a possible implementation, performing the channel estimation based on the manifold-based channel estimation policy includes: determining a first channel vector and a second channel vector based on a reference signal pattern and the reference signal, where the reference signal pattern indicates a location of a time-frequency resource that is available for transmitting the reference signal; and determining the at least one interpolated channel vector based on the first channel vector, the second channel vector, and the manifold-based channel estimation policy.

In a possible implementation, the method further includes: receiving indication information, where the indication information indicates a reference signal pattern, and the reference signal pattern indicates a location of a corresponding time-frequency resource that is available for transmitting the reference signal; and receiving the reference signal.

In a possible implementation, the first information is a parameter value, and the parameter value is greater than 0.

In a possible implementation, when a value of the first information is 2, the manifold-based channel estimation policy indicates to determine a third vector $\boldsymbol{s}_t$ and a fourth vector $\boldsymbol{s}'_t$:

$$\boldsymbol{s}_t = \left(\boldsymbol{s}_0 \cdot \cos(t \cdot \theta) + \left(e^{-\mathrm{j}\varphi} \cdot \boldsymbol{s}_1 - \boldsymbol{s}_0 \cdot \cos(\theta)\right) \cdot \frac{\sin(t \cdot \theta)}{\sin(\theta)}\right) \cdot e^{+\mathrm{j}\varphi \cdot t};$$

and

$$\boldsymbol{s}'_t = (|\boldsymbol{s}'_0| + (|\boldsymbol{s}'_1| - |\boldsymbol{s}'_0|) \cdot t) \cdot \boldsymbol{s}_t.$$

The third vector $\boldsymbol{s}_t$ and the fourth vector $\boldsymbol{s}'_t$ are interpolated channel vectors, the third vector $\boldsymbol{s}_t$ is a channel vector obtained after the fourth vector $\boldsymbol{s}'_t$ is normalized, $\boldsymbol{s}'_0$ and $\boldsymbol{s}'_1$ are channel vectors determined based on the reference signal pattern and the reference signal, $\boldsymbol{s}_0$ and $\boldsymbol{s}_1$ respectively are channel vectors obtained after $\boldsymbol{s}'_0$ and $\boldsymbol{s}'_1$ are normalized, $\theta$ is a spatial included angle between $\boldsymbol{s}_0$ and $\boldsymbol{s}_1$, $\varphi$ is a propagation rotation included angle between $\boldsymbol{s}_0$ and $\boldsymbol{s}_1$, $t$ is a relative location of the interpolated channel vector (for example, $\boldsymbol{s}_0$ or $\boldsymbol{s}_1$), and $t$ is greater than or equal to 0 and less than or equal to 1.

In a possible implementation, when a value of the first information is 1, the manifold-based channel estimation policy indicates to determine a third vector $\boldsymbol{s}_t$ and a fourth vector $\boldsymbol{s}'_t$:

$$\boldsymbol{s}_t = \left(\boldsymbol{s}_0 + \left(e^{-\mathrm{j}\varphi} \cdot \boldsymbol{s}_1 - \boldsymbol{s}_0\right) \cdot \frac{\sin(t \cdot \theta)}{\sin\left(\mathrm{asin}\left(\sin(\theta) \cdot \frac{1}{|e^{-\mathrm{j}\varphi} \cdot s_1 - s_0|}\right) + t \cdot \theta\right)} \cdot \frac{1}{\sqrt{2 - 2 \cdot \cos(\theta)}}\right) \cdot e^{+\mathrm{j}\varphi \cdot t};$$

and

$$\boldsymbol{s}'_t = (|\boldsymbol{s}'_0| + (|\boldsymbol{s}'_1| - |\boldsymbol{s}'_0|) \cdot t) \cdot \boldsymbol{s}_t.$$

The third vector $\boldsymbol{s}_t$ and the fourth vector $\boldsymbol{s}'_t$ are interpolated channel vectors, the third vector $\boldsymbol{s}_t$ is a channel vector obtained after the fourth vector $\boldsymbol{s}'_t$ is normalized, $\boldsymbol{s}'_0$ and $\boldsymbol{s}'_1$ are channel vectors determined based on the reference signal pattern and the reference signal, $\boldsymbol{s}_0$ and $\boldsymbol{s}_1$ respectively are channel vectors obtained after $\boldsymbol{s}'_0$ and $\boldsymbol{s}'_1$ are normalized, $\theta$ is a spatial included angle between $\boldsymbol{s}_0$ and $\boldsymbol{s}_1$, $\varphi$ is a propagation rotation included angle between $\boldsymbol{s}_0$ and $\boldsymbol{s}_1$, $t$ is a relative location of the interpolated channel vector (for example, $\boldsymbol{s}_0$ or $\boldsymbol{s}_1$), and $t$ is greater than or equal to 0 and less than or equal to 1.

In a possible implementation, when a value of the first information is 3, the manifold-based channel estimation policy indicates to determine a third vector $\boldsymbol{s}_t$ and a fourth vector $\boldsymbol{s}'_t$:

$$\boldsymbol{s}_t = \frac{r}{|r|} \cdot \sqrt[3]{\cos^3\left(\frac{\pi}{2}t\right) + \sin^3\left(\frac{\pi}{2}t\right)} \cdot e^{+j\varphi \cdot t};$$

and

$$\boldsymbol{s}'_t = (|\boldsymbol{s}'_0| + (|\boldsymbol{s}'_1| - |\boldsymbol{s}'_0|) \cdot t) \cdot \boldsymbol{s}_t.$$

The third vector $\boldsymbol{s}_t$ and the fourth vector $\boldsymbol{s}'_t$ are interpolated channel vectors, the third vector $\boldsymbol{s}_t$ is a channel vector obtained after the fourth vector $\boldsymbol{s}'_t$ is normalized, $\boldsymbol{s}'_0$ and $\boldsymbol{s}'_1$ are channel vectors determined based on the reference signal pattern and the reference signal, $\boldsymbol{s}_0$ and $\boldsymbol{s}_1$ respectively are channel vectors obtained after $\boldsymbol{s}'_0$ and $\boldsymbol{s}'_1$ are normalized, $\theta$ is a spatial included angle between $\boldsymbol{s}_0$ and $\boldsymbol{s}_1$, $\varphi$ is a propagation rotation included angle between $\boldsymbol{s}_0$ and $\boldsymbol{s}_1$, $t$ is a relative location of the interpolated channel vector (for example, $\boldsymbol{s}_0$ or $\boldsymbol{s}_1$), $t$ is greater than or equal to 0 and less than or equal to 1, and

$$r = s_0 + \left(e^{-j\varphi} \cdot s_1 - s_0\right) \cdot \frac{\sin(t \cdot \theta)}{\sin\left(asin\left(\sin(\theta) \cdot \frac{1}{|e^{-j\varphi} \cdot s_1 - s_0|}\right) + t \cdot \theta\right)} \cdot \frac{1}{\sqrt{2 - 2 \cdot \cos(\theta)}}.$$

According to a second aspect, a channel estimation method is provided. The method may be performed by a second device, or may be performed by a component (for example, a chip or a circuit) of the second device. This is not limited. For ease of description, the following uses an example in which the method is performed by the second device for description.

The method may include: determining first information based on a channel state, where the channel state is a channel state corresponding to a channel used to transmit a reference signal, the reference signal is used for channel estimation, and the first information indicates a manifold-based channel estimation policy; and sending the first information.

In the foregoing solution, the second device determines, based on the channel state, the first information indicating the manifold-based channel estimation policy, so that the first device can perform channel estimation based on the indicated manifold-based channel estimation policy. In this way, channel estimation can be flexibly performed based on different channel states, and channel estimation performance is improved.

In a possible implementation, the method further includes: receiving capability information, where the capability information indicates that the first device has a manifold-based channel estimation capability.

In the foregoing solution, when the second device receives the capability information reported by the first device, where the capability information indicates that the first device has the manifold-based channel estimation capability, the second device can determine the manifold-based channel estimation policy for the first device.

In a possible implementation, determining the first information based on the channel state includes: determining the first information in frequency domain based on the channel state corresponding to a channel vector group, where the reference signal corresponds to at least one channel vector group, the channel vector group includes at least two vectors, and the channel vector group is in a one-to-one correspondence with the first information; and/or determining the first information in space domain based on the channel state corresponding to a port corresponding to the at least one reference signal, where the port of the reference signal is in a one-to-one correspondence with the first information.

In the foregoing solution, different channel vector groups can correspond to different first information, and/or different ports for sending reference signals can correspond to different first information. In this way, channel estimation can be more flexibly performed on different channels. In a possible implementation, the manifold-based channel estimation policy is used to determine at least one interpolated channel vector corresponding to the reference signal.

In a possible implementation, the at least one piece of first information is in a one-to-one correspondence with the at least one manifold-based channel estimation policy.

In the foregoing solution, different first information corresponds to different manifold-based channel estimation policies, so that channel estimation can be more flexibly performed on different channels.

In a possible implementation, the method further includes: sending indication information, where the indication information indicates a reference signal pattern, and the reference signal pattern indicates a location of a corresponding time-frequency resource that is available for transmitting the reference signal; and sending the reference signal.

In a possible implementation, the first information is a parameter value, and the parameter value is greater than 0.

In a possible implementation, when a value of the first information is 2, the manifold-based channel estimation policy indicates to determine a third vector $s_t$ and a fourth vector $s'_t$:

$$s_t = \left(s_0 \cdot \cos(t \cdot \theta) + \left(e^{-j\varphi} \cdot s_1 - s_0 \cdot \cos(\theta)\right) \cdot \frac{\sin(t \cdot \theta)}{\sin(\theta)}\right) \cdot e^{+j\varphi \cdot t};$$

and

$$s'_t = \left(|s'_0| + \left(|s'_1| - |s'_0|\right) \cdot t\right) \cdot s_t.$$

The third vector $s_t$ and the fourth vector $s'_t$ are interpolated channel vectors, the third vector $s_t$ is a channel vector obtained after the fourth vector $s'_t$ is normalized, $s'_0$ and $s'_1$ are channel vectors determined based on the reference signal pattern and the reference signal, $s_0$ and $s_1$ respectively are channel vectors obtained after $s'_0$ and $s'_1$ are normalized, $\theta$ is a spatial included angle between $s_0$ and $s_1$, $\varphi$ is a propagation rotation included angle between $s_0$ and $s_1$, $t$ is a relative location of the interpolated channel vector (for example, $s_0$ or $s_1$), and $t$ is greater than or equal to 0 and less than or equal to 1.

In a possible implementation, when a value of the first information is 1, the manifold-based channel estimation policy indicates to determine a third vector $s_t$ and a fourth vector $s'_t$:

$$s_t = \left( s_0 + \left( e^{-j\varphi} \cdot s_1 - s_0 \right) \cdot \frac{\sin(t \cdot \theta)}{\sin\left( a\sin\left( \sin(\theta) \cdot \frac{1}{\left| e^{-j\varphi} \cdot s_1 - s_0 \right|} \right) + t \cdot \theta \right)} \cdot \frac{1}{\sqrt{2 - 2 \cdot \cos(\theta)}} \right) \cdot e^{+j\varphi \cdot t};$$

and

$$s'_t = \left( |s'_0| + \left( |s'_1| - |s'_0| \right) \cdot t \right) \cdot s_t.$$

The third vector $s_t$ and the fourth vector $s'_t$ are interpolated channel vectors, the third vector $s_t$ is a vector obtained after the fourth vector $s'_t$ is normalized, $s'_0$ and $s'_1$ are channel vectors determined based on the reference signal pattern and the reference signal, $s_0$ and $s_1$ respectively are vectors obtained after $s'_0$ and $s'_1$ are normalized, $\theta$ is a spatial included angle between $s_0$ and $s_1$, $\varphi$ is a propagation rotation included angle between $s_0$ and $s_1$, $t$ is a relative location of the interpolated channel vector (for example, $s_0$ or $s_1$), and $t$ is greater than or equal to 0 and less than or equal to 1.

In a possible implementation, when a value of the first information is 3, the manifold-based channel estimation policy indicates to determine a third vector $s_t$ and a fourth vector $s'_t$:

$$s_t = \frac{r}{|r|} \cdot \sqrt[3]{\cos^3\left( \frac{\pi}{2} t \right) + \sin^3\left( \frac{\pi}{2} t \right)} \cdot e^{+j\varphi \cdot t};$$

and

$$s'_t = \left( |s'_0| + \left( |s'_1| - |s'_0| \right) \cdot t \right) \cdot s_t.$$

The third vector $s_t$ and the fourth vector $s'_t$ are interpolated channel vectors, the third vector $s_t$ is a vector obtained after the fourth vector $s'_t$ is normalized, $s'_0$ and $s'_1$ are vectors determined based on the reference signal pattern and the reference signal, $s_0$ and $s_1$ respectively are channel vectors obtained after $s'_0$ and $s'_1$ are normalized, $\theta$ is a spatial included angle between $s_0$ and $s_1$, $\varphi$ is a propagation rotation included angle between $s_0$ and $s_1$, $t$ is a relative location of the interpolated channel vector (for example, $s_0$ or $s_1$), $t$ is greater than or equal to 0 and less than or equal to 1, and

$$r = s_0 + \left( e^{-j\varphi} \cdot s_1 - s_0 \right) \cdot \frac{\sin(t \cdot \theta)}{\sin\left( a\sin\left( \sin(\theta) \cdot \frac{1}{\left| e^{-j\varphi} \cdot s_1 - s_0 \right|} \right) + t \cdot \theta \right)} \cdot \frac{1}{\sqrt{2 - 2 \cdot \cos(\theta)}}.$$

According to a third aspect, a communication apparatus is provided, including a unit configured to perform the method according to the first aspect. The communication apparatus may be a first device, or may be a chip or a circuit disposed in the first device. This is not limited in this application.

The communication apparatus includes:
a transceiver unit, configured to receive first information, where the first information indicates a manifold-based channel estimation policy, the first information is associated with a channel state corresponding to a channel used to transmit a reference signal, and the reference signal is used for channel estimation; and a processing unit, configured to determine the manifold-based channel estimation policy based on the first information.

In a possible implementation, the transceiver unit is further configured to send capability information, where the capability information indicates that the communication apparatus has a manifold-based channel estimation capability.

In a possible implementation, the first information is in a one-to-one correspondence with a channel vector group in frequency domain, the reference signal corresponds to at least one channel vector group, and the channel vector group includes at least two vectors; and/or the first information is in a one-to-one correspondence with a port corresponding to the reference signal in space domain.

In a possible implementation, the manifold-based channel estimation policy is used to determine at least one interpolated channel vector corresponding to the reference signal.

In a possible implementation, the at least one piece of first information is in a one-to-one correspondence with the at least one manifold-based channel estimation policy.

In a possible implementation, the processing unit is further configured to perform channel estimation based on the manifold-based channel estimation policy.

In a possible implementation, the processing unit is further configured to determine a first channel vector and a second channel vector based on a reference signal pattern and the reference signal, where the reference signal pattern indicates a location of a time-frequency resource that is available for transmitting the reference signal. The processing unit is further configured to determine at least one interpolated channel vector based on the first channel vector, the second channel vector, and the manifold-based channel estimation policy.

In a possible implementation, the transceiver unit is further configured to: receive indication information, where the indication information indicates a reference signal pattern, and the reference signal pattern indicates a location of a corresponding time-frequency resource that is available for transmitting the reference signal; and receive the reference signal.

For explanations and beneficial effect of related content of the communication apparatus provided in the third aspect, refer to the method shown in the first aspect. Details are not described herein again.

According to a fourth aspect, a communication apparatus is provided, including a unit configured to perform the method according to the second aspect. The communication apparatus may be a second device, or may be a chip or a circuit disposed in the second device. This is not limited in this application.

The communication apparatus includes:
a processing unit, configured to determine first information based on a channel state, where the channel state is a channel state corresponding to a channel used to transmit a reference signal, the reference signal is used for channel estimation, and the first information indicates a manifold-based channel estimation policy; and a transceiver unit, configured to send the first information.

In a possible implementation, the transceiver unit is further configured to receive capability information, where the capability information indicates that a first device has a manifold-based channel estimation capability.

In a possible implementation, the processing unit is further configured to determine the first information in frequency domain based on the channel state corresponding to a channel vector group, where the reference signal corresponds to at least one channel vector group, the channel vector group includes at least two vectors, and the channel vector group is in a one-to-one correspondence with the first information; and/or the processing unit is further configured to determine the first information in space domain based on the channel state corresponding to a port corresponding to the at least one reference signal, where the port of the reference signal is in a one-to-one correspondence with the first information.

In a possible implementation, the manifold-based channel estimation policy is used to determine at least one interpolated channel vector corresponding to the reference signal.

In a possible implementation, the at least one piece of first information is in a one-to-one correspondence with the at least one manifold-based channel estimation policy.

In a possible implementation, the transceiver unit is further configured to send indication information, where the indication information indicates a reference signal pattern, and the reference signal pattern indicates a location of a corresponding time-frequency resource that is available for transmitting the reference signal; and the transceiver unit is further configured to send the reference signal.

For explanations and beneficial effect of related content of the communication apparatus provided in the fourth aspect, refer to the method shown in the second aspect. Details are not described herein again.

According to a fifth aspect, a communication system is provided. The system includes: A second device determines first information based on a channel state, where the channel state is a channel state corresponding to a channel used to transmit a reference signal, the reference signal is used for channel estimation, and the first information indicates a manifold-based channel estimation policy; the second device sends the first information to a first device; and the first device determines the manifold-based channel estimation policy based on the first information.

In the foregoing solution, channel estimation is performed based on the manifold-based channel estimation policy indicated by the first information, so that channel estimation can be flexibly performed based on different channel states, thereby improving channel estimation performance. According to a sixth aspect, a communication apparatus is provided. The apparatus includes: a memory, configured to store a program; and at least one processor, configured to execute the computer program or instructions stored in the memory, to perform the method according to any one of the possible implementations of the first aspect or the second aspect.

In an implementation, the apparatus is a first device.

In another implementation, the apparatus is a chip, a chip system, or a circuit used in the first device.

According to a seventh aspect, this application provides a processor configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code executed by a device, and the program code includes the method used to perform any one of the possible implementations of the first aspect or the second aspect.

According to a ninth aspect, a computer program product including instructions is provided. When the computer program product runs on a computer, the computer is enabled to perform the method according to any one of the possible implementations of the first aspect or the second aspect.

According to a tenth aspect, a chip is provided. The chip includes a processor and a communication interface. The processor reads, through the communication interface, instructions stored in a memory, to perform the method according to any one of the possible implementations of the first aspect or the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the possible implementations of the first aspect or the second aspect.

## BRIEF DESCRIPTION OF DRAWINGS

FIG. 1 is diagram of a network architecture applicable to an embodiment of this application;
FIG. 2 is a schematic flowchart of a communication method 200 according to an embodiment of this application;
FIG. 3 is a schematic flowchart of a communication method 300 according to an embodiment of this application;
FIG. 4 is a diagram of a geodesic line of manifold-based channel estimation when a parameter q is 1;
FIG. 5 is a diagram of a geodesic line of manifold-based channel estimation when a parameter q is 2;
FIG. 6 is a diagram of a geodesic line of manifold-based channel estimation when a parameter q is 3;
FIG. 7 is a diagram of a geodesic line of manifold-based channel estimation when a parameter q is 0.4;
FIG. 8 is a diagram of geodesic lines of manifold-based channel estimation when a parameter q has different values;
FIG. 9 is a block diagram of a communication apparatus 900 according to an embodiment of this application;
FIG. 10 is a block diagram of another communication apparatus 1000 according to an embodiment of this application; and
FIG. 11 is a diagram of a chip system 1100 according to an embodiment of this application.

## DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th Generation, 6G) mobile communication system. The technical solutions provided in this application may be further applied to device-to-device (device-to-device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system. This is not limited in this application.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like; may be a gNB or a transmission point (TRP or TP) in a 5G system like an NR system, one or one group (including a plurality of antenna panels) of antenna panels of a base station in a 5G system; or may be a network node constructing a gNB or a transmission point, for example, a baseband unit (BBU) or a distributed unit (distributed unit, DU), or a base station in a next generation 6G communication system.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs. In addition, the terminal device may alternatively be a terminal device in an internet of things (internet of things, IoT) system. IoT is an important part of future information technology development. A main technical feature of the IoT is to connect an object to a network by using a communication technology, to implement an intelligent network for human-machine interconnection and thing-thing interconnection. An IoT technology may implement massive connections, deep coverage, and terminal power saving by using, for example, a narrow band (narrow band) NB technology.

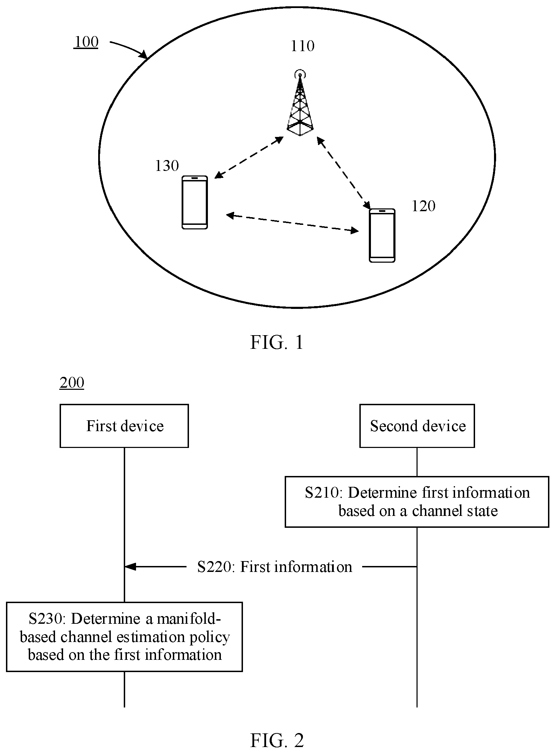

In an example, FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 and a terminal device 130 shown in FIG. 1. Both the network device and the terminal device may be configured with a plurality of antennas. The network device and the terminal device may communicate with each other by using a multi-antenna technology. For example, the network device 110 communicates with the terminal device 120 and the terminal device 130 separately through an air interface (the radio interface between UTRAN and ue, Uu interface). Terminal devices may directly communicate with each other. For example, terminal device 120 and terminal device 130 communicate with each other through a proximity-based services communication 5 (proximity-based services communication 5, PC5) interface.

When the network device communicates with the terminal device, the network device may manage at least one cell, and there may be at least one terminal device in one cell. Optionally, the network device 110 and the terminal device 120 form one single-cell communication system. Without loss of generality, the cell is referred to as a cell #1. The network device 110 may be a network device in the cell #1, or the network device 110 may serve a terminal device (for example, the terminal device 120) in the cell #1.

It should be noted that, the cell may be understood as an area within coverage of a radio signal of the network device.

It should be understood that FIG. 1 is merely a simplified diagram of an example for ease of understanding. The wireless communication system 100 may further include another network device or may further include another terminal device, which is not shown in FIG. 1. It may be understood that embodiments of this application are applicable to any communication scenario in which a network device communicates with a terminal device, for example, the network device communicates with a terminal device in a cell, and the terminal device in a cell communicates with a terminal device outside a cell; or for another example, terminal devices outside a cell communicate with each other. It may be understood that embodiments of this application are applicable to downlink communication and uplink communication. In downlink communication, the network device serves as a transmit end, the terminal device serves as a receive end, and the network device may send a downlink reference signal and downlink data to the terminal device. In uplink communication, the terminal device serves as a transmit end, the network device serves as a receive end, and the terminal device may send an uplink reference signal and uplink data to the network device.

For ease of understanding of embodiments of this application, the following describes embodiments of this application in several aspects.

(1) "Sending" and "receiving" in embodiments of this application represent signal transmission directions. For example, "sending information to XX" may be understood as that a destination end of the information is the XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination, but the destination may understand valid information from the source. Similar descriptions in this application may be understood similarly, and details are not described again.

(2) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a transmitter of the indication information, the indication information may indicate to-be-indicated information, and for a receiver of the indication information, the indication information may be for determining to-be-indicated information.

For ease of understanding of embodiments of this application, terms in embodiments of this application are briefly described below.

1. Multiple-input multiple-output (multi-input multi-output, MIMO) technology

In the MIMO technology, an array gain, multiplexing and diversity gains, and a co-channel interference reduction gain in space can be obtained for a signal by using a resource in a space dimension without increasing a system bandwidth, so that a capacity and spectral efficiency of a communication system are exponentially improved. For example, in an LTE system, the system may use a plurality of antennas at a transmit end and a receive end to support transmission of up to eight layers, thereby effectively improving a system capacity.

2. Time-frequency resource

In embodiments of this application, data or information may be carried by using a time-frequency resource. The time-frequency resource may include a time domain resource and a frequency domain resource. In time domain, the time-frequency resource may include one or more time domain units (which may also be referred to as time elements or time units). In frequency domain, the time-frequency resource may include one or more frequency domain units.

One time domain unit may be one symbol or several symbols (for example, orthogonal frequency division multiplexing (orthogonal frequency division multiplexing, OFDM) symbols), one slot (slot), one mini-slot (mini-slot), or one subframe (subframe). One slot may include seven or 14 symbols. One mini-slot may include at least one symbol (for example, two symbols, seven symbols, or 14 symbols, or any quantity of symbols less than or equal to 14 symbols). Duration of one subframe in time domain may be 1 millisecond (ms). It should be understood that sizes of the foregoing listed time domain units are only used for ease of understanding of the solutions in this application, and do not constitute a limitation on the protection scope of this application. It may be understood that the sizes of the foregoing time domain units may be other values. This is not limited in this application.

A frequency domain unit may be a resource block (resource block, RB), a subcarrier (subcarrier), a resource block group (resource block group, RBG), a predefined subband (subband), a precoding resource block group (precoding resource block group, PRG), a bandwidth part (bandwidth part, BWP), a resource element (resource element, RE) (which may also be referred to as a resource unit or a resource element), a carrier, or a serving cell.

3. Channel estimation

The channel estimation refers to a process of reconstructing or restoring a received signal to compensate for signal distortion caused by fading caused by channel fading and noise, where changes in time domain and frequency domain of a channel are tracked by using a reference signal (reference signal, RS) predicted by a transmitter machine and a receiver machine.

4. Reference signal

The reference signal may also be referred to as a pilot (pilot), a reference sequence, a reference signal, or the like. In this application, the reference signal may be a reference signal used for channel measurement and channel estimation. Reference signals are distributed on different REs in a time-frequency two-dimensional space in an OFDM symbol, and have known amplitudes and phases. In a MIMO system, each transmit antenna (a virtual antenna or a physical antenna) has an independent data channel. A receiver performs channel estimation for each transmit antenna based on a known RS signal, and restores transmit data based on the channel estimation. Currently, a plurality of reference signals have been defined in the standard, for example, a cell common reference signal (cell-specific reference signal, CRS), a demodulation reference signal (demodulation reference signal, DMRS), a channel state information reference symbol (channel state information-reference signal, CSI-RS), and a sounding reference signal (sounding reference signal, SRS). The DMRS is used to estimate an equivalent channel matrix of a data channel (for example, a physical uplink shared channel (physical uplink shared channel, PUSCH) or a physical downlink shared channel (physical downlink shared channel, PDSCH)) or a control channel (for example, a physical uplink shared channel (physical uplink control channel, PUCCH) or a physical downlink shared channel (physical downlink control channel, PDCCH)), to detect and demodulate data on a corresponding channel. The CSI-RS is used to measure channel information and report information such as a channel quality indicator (channel quality indicator, CQI), a precoding matrix indicator (precoding matrix indicator, PMI), and a rank indicator (rank indicator, RI). The SRS is used to measure an uplink channel, and may estimate a downlink channel based on the uplink channel, so that a precoding matrix used for downlink transmission may be determined.

It should be understood that the foregoing listed reference signals are merely examples, and should not constitute any limitation on this application. This application does not exclude a possibility of defining another reference signal in a future protocol to implement a same or similar function.

5. Antenna port (antenna port)

The antenna port is referred to as a port (port) for short, and may include a transmit port (or referred to as a transmission port) and a receive port. The transmit port may be understood as a virtual antenna identified by a receiving device, a transmit antenna identified by a receive end, or a transmit antenna that can be distinguished in space. The transmit port may also be referred to as a port of a precoding reference signal. A reference signal of each transmit port may be transmitted by using one or more frequency domain units. One antenna port may be configured for each virtual antenna, and each virtual antenna may be a weighted combination of a plurality of physical antennas. The receive port may be understood as a receive antenna of the receiving device. For example, in downlink transmission, the receive port may be a receive antenna of a terminal device. Based on different carried signals, the antenna port may be classified into a reference signal antenna port (or referred to as a reference signal port or a pilot port) and a data antenna port (data port for short). For example, the reference signal port includes but is not limited to a DMRS port and a CSI-RS port.

Currently, when data is transmitted by using the MIMO technology, it is very important to estimate an uplink channel or a downlink channel. Channel estimation can be performed in a plurality of channel estimation manners. In manifold-based channel estimation, it is assumed that a change of a channel between two adjacent known channel vectors can be described by using a geodesic line, that is, the two known channel vectors and a channel vector between the two known channel vectors are located on one geodesic line. A conventional geodesic line can be represented by a series of arcs with different radii. How to apply different channel states during manifold-based channel estimation is a problem worth studying.

This application provides a channel estimation method. The channel estimation method is used to determine a manifold-based channel estimation policy based on a channel state, so that channel estimation can be flexibly performed based on different channel states, and channel estimation performance can be improved.

The following describes in detail a channel estimation method provided in this application with reference to FIG. 2.

FIG. 2 is a diagram of a channel estimation method 200 according to an embodiment of this application.

210: A second device determines first information based on a channel state.

The channel state is a channel state corresponding to a channel used to transmit a reference signal, and the reference signal is used for channel estimation.

The first information indicates a manifold-based channel estimation policy.

Specifically, the manifold-based channel estimation policy is used to determine at least one interpolated channel vector corresponding to the reference signal.

For example, the first information is a parameter value, and the parameter value is greater than 0. It should be understood that at least one piece of first information is in a one-to-one correspondence with at least one manifold-based channel estimation policy. In other words, different first information corresponds to different manifold-based channel estimation policies.

In a possible implementation, the second device knows channel vectors corresponding to a channel used to transmit the reference signal, including a first channel vector, a second channel vector, and at least one channel vector between the first channel vector and the second channel vector. The second device determines different interpolated channel vector groups (including at least one interpolated channel vector) based on different manifold-based channel estimation policies and a channel vector #1 and a channel vector #2. The second device determines errors between the at least one interpolated channel vector and the at least one channel vector under different manifold-based channel estimation policies, and indicates, as the first information, a manifold-based channel estimation policy corresponding to the at least one interpolated channel vector with a minimum error.

For example, the second device knows that the channel vectors corresponding to a channel used to transmit the reference signal include the channel vector #1, the channel vector #2, and channel vectors (a channel vector #3 and a channel vector #4) between the channel vector #1 and the channel vector #2. When a value of the first information is 1, the first information indicates a manifold-based channel estimation policy #1. When a value of the first information is 2, the first information indicates a manifold-based channel estimation policy #2. The second device determines interpolated channel vectors (an interpolated channel vector #1 and an interpolated channel vector #2) based on the manifold-based channel estimation policy #1, the channel vector #1, and the channel vector #2, and determines interpolated channel vectors (an interpolated channel vector #3 and an interpolated channel vector #4) based on the manifold-based channel estimation policy #2, the channel vector #1, and the channel vector #2. Further, the second device determines an error #1 (for example, a mean square error) between the obtained interpolated channel vector #1 and the channel vector #3 and an error #2 between the obtained interpolated channel vector #2 and the channel vector #4 in the manifold-based channel estimation policy #1. Further, an error #3 (for example, the error #1 and the error #2 are added to obtain the error #3, and a manner of obtaining the error #3 based on the error #1 and the error #2 is not limited in this application) of channel estimation in the manifold-based channel estimation policy #1 is obtained based on the error #1 and the error #2. The second device determines an error #4 between the obtained interpolated channel vector #3 and the channel vector #3 and an error #5 between the obtained interpolated channel vector #4 and the channel vector #4 in the manifold-based channel estimation policy #2. Further, an error #6 (for example, the error #4 and the error #5 are added to obtain the error #6, and a manner of obtaining the error #6 based on the error #4 and the error #5 is not limited in this application) of channel estimation in the manifold-based channel estimation policy #2 is obtained based on the error #4 and the error #5. If the error #5 is less than the error #6, the second device determines that a value of the first information is 1, that is, the first information is indicated as the manifold-based channel estimation policy #1.

In a possible implementation, the first information is in a one-to-one correspondence with a channel vector group in frequency domain, the reference signal corresponds to at least one channel vector group, and the channel vector group includes at least two vectors.

It should be understood that, that the first information is in a one-to-one correspondence with the channel vector group in frequency domain may be understood as: In frequency domain, a reference signal used for channel estimation corresponds to at least one channel vector group, and each channel vector group includes at least two vectors.

For example, in frequency domain, reference signals used for channel estimation are sequentially mapped to three time-frequency resources A, B, and C, and channel estimation may be performed between A and B, between B and C, and from A to C based on a manifold-based channel estimation policy. It is assumed that A corresponds to a channel vector #1, B corresponds to a channel vector #2, and C corresponds to a channel vector #3. A and B correspond to a channel vector group #1 (the channel vector group #1 includes the channel vector #1 and the channel vector #2), A to C correspond to a channel vector group #2 (the channel vector group #2 includes the channel vector #1, the channel vector #2, and the channel vector #3), and B and C correspond to a channel vector group #3 (the channel vector group #3 includes the channel vector #2 and the channel vector #3). In other words, the reference signals used for channel estimation correspond to three channel vector groups (the channel vector group #1, the channel vector group #2, and the channel vector group #3). The channel vector group #1 corresponds to first information #1, the channel vector group #2 corresponds to first information #2, and the channel vector group #3 corresponds to first information #3.

It should be understood that, when channel estimation is performed between A and B in the foregoing example, because A and B correspond to the channel vector group #1, channel estimation may be performed between A and B based on a manifold-based channel estimation policy indicated by the first information #1 corresponding to the channel vector group #1. Because the channel vector group #2 corresponding to A to C also includes A and B, channel estimation may be further performed between A and B based on a manifold-based channel estimation policy indicated by the first information #2 corresponding to the channel vector group #2. This is not limited in this application.

It should be understood that the first information corresponding to the channel vector group #1 may be the same as or different from the first information corresponding to the channel vector group #2. For example, values of the first information corresponding to the channel vector group #1 and the channel vector group #2 are both 2. For another example, a value of the first information corresponding to the channel vector group #1 is 1, and a value of the first information corresponding to the channel vector group #2 is 2. This is not limited in this application.

In a possible implementation, the first information is in a one-to-one correspondence with a port corresponding to a reference signal in space domain.

It should be understood that, that the first information is in a one-to-one correspondence with the port corresponding to the reference signal in space domain may be understood as: in space domain, different ports that carry reference signals used for channel estimation each have corresponding first information. For example, both a port #1 and a port #2 carry a reference signal used for channel estimation, the port #1 corresponds to first information, and the port #2 corresponds to first information.

It should be understood that the first information corresponding to the port #1 may be the same as or different from the first information corresponding to the port #2. For example, values of the first information corresponding to the port #1 and the port #2 are both 2. For another example, a value of the first information corresponding to the port #1 is 1, and a value of the first information corresponding to the port #2 is 2. This is not limited in this application.

It should be understood that the second device may determine the channel state based on channel state information fed back by the terminal device, downlink channel state information obtained through channel estimation based on a received uplink pilot sequence, or the like. This is not limited in this application.

220: The second device sends the first information to a first device.

Correspondingly, the first device receives the first information from the second device.

The first device may be a terminal device or a network device. The second device may be a terminal device or a network device.

It should be noted that when the first device is a terminal device, the second device may be a terminal device or a network device; or when the first device is a network device, the second device may be a terminal device, a network device, or the like. This is not limited in this application. 230: The first device determines the manifold-based channel estimation policy based on the first information.

In a possible implementation, after receiving the first information, the first device determines the manifold-based channel estimation policy based on a correspondence between the first information and the manifold-based channel estimation policy.

Based on the foregoing solution, channel estimation is performed based on the manifold-based channel estimation policy indicated by the first information, so that channel estimation can be flexibly performed based on different channel states, thereby improving channel estimation performance.

Optionally, before 210, the first device further reports whether the first device has a manifold-based channel estimation capability. The method 200 further includes the following.

240: The first device sends capability information to the second device.

Correspondingly, the second device receives the capability information from the first device. The capability information indicates that the first device has a manifold-based channel estimation capability.

Optionally, when the first device reports to the second device that the first device does not have a manifold-based channel estimation capability, the second device does not perform 210. In other words, the second device does not determine the first information based on the channel state.

It should be understood that, when the second device does not have a manifold-based channel estimation capability, the second device may perform channel estimation by using an existing channel estimation technology. This is not limited in this application.

Optionally, after the first device determines the manifold-based channel estimation policy, the first device performs channel estimation based on the policy. The method 200 further includes the following.

250: The first device performs channel estimation based on the manifold-based channel estimation policy.

In a possible implementation, the first device determines a first channel vector and a second channel vector based on a reference signal pattern and the reference signal, and determines at least one interpolated channel vector based on the first channel vector, the second channel vector, and the manifold-based channel estimation policy determined in step 230, to complete channel estimation.

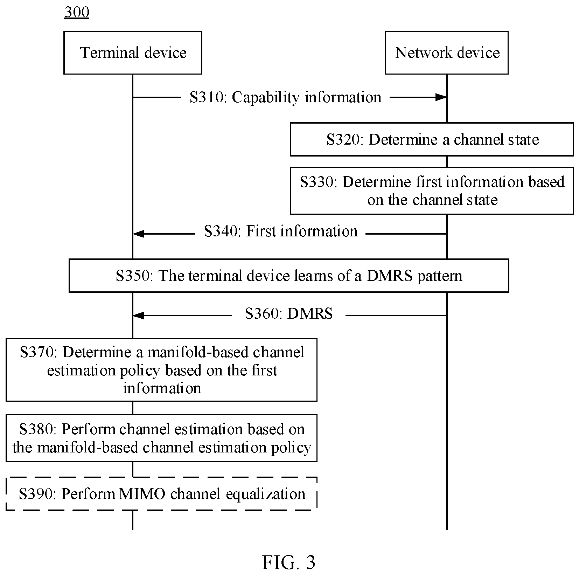

Based on FIG. 2, the following describes in detail a channel estimation method provided in this application with reference to FIG. 3 to FIG. 5 by using an example in which channel estimation is performed based on a demodulation reference signal (demodulation reference signal, DMRS). For ease of description, in FIG. 3 to FIG. 5, an example in which the first device is a terminal device and the second device is a network device is used for description.

FIG. 3 is a diagram of a channel estimation method 300 according to an embodiment of this application.

310: A terminal device sends capability information to a network device.

Correspondingly, the network device receives the capability information from the terminal device. The capability information indicates whether the terminal device has a manifold-based channel estimation capability.

For example, the capability information indicates that the terminal device has a manifold-based channel estimation capability; or the capability information indicates that the terminal device does not have a manifold-based channel estimation capability.

In a possible implementation, after initially accessing a cell, the terminal device reports the capability information to the network device.

It should be understood that when the capability information sent by the terminal device to the network device indicates that the terminal device does not have a manifold-based channel estimation capability, the terminal device performs channel estimation by using another existing channel estimation technology.

It should be understood that when the capability information sent by the terminal device to the network device indicates that the terminal device has a manifold-based channel estimation capability, the network device determines the first information based on the channel state, and the method 300 further includes the following.

320: The network device determines the channel state.

Specifically, the network device determines the channel state corresponding to a channel used to transmit a reference signal.

In a possible implementation, in a time division duplex (time division duplex, TDD) transmission mode, the terminal device sends an uplink pilot sequence to the network device, and the network device performs channel estimation based on the received uplink pilot sequence, and then obtains downlink channel state information based on channel reciprocity, that is, learns of the channel state corresponding to the channel used to transmit the reference signal.

In a possible implementation, in the TDD transmission mode, the network device may learn, based on channel state information fed back by the terminal device, of the channel state corresponding to the channel used to transmit the reference signal.

In a possible implementation, in frequency division duplex (Frequency Division Duplex, FDD) transmission mode, the network device learns, based on channel state information fed back by the terminal device, of the channel state corresponding to the channel used to transmit the reference signal.

It should be noted that a manner in which the network device determines the channel state is merely an example. For a specific manner in which the network device determines the channel state, refer to the conventional technology. This is not limited in this application.

330: The network device determines the first information based on the channel state.

The first information indicates a manifold-based channel estimation policy.

In a possible implementation, the first information includes a parameter q, and q is greater than 0. It should be understood that the parameter q is a geodesic line of manifold-based channel estimation under an $L_q$ metric (which may also be referred to as a q metric). Specifically, if $\boldsymbol{x}$ is a vector whose dimension is $n \times 1$, the Lq metric performed on the vector $\boldsymbol{x}$ may be represented as $\|\boldsymbol{x}\|_q$. Specifically,

$$\|\boldsymbol{x}\|_q = \left( \sum_{i=1}^{n} |\boldsymbol{x}(i)|^q \right)^{\frac{1}{q}}$$

$|\boldsymbol{x}(i)|^q$ represents a $q^{th}$ power of an absolute value of $\boldsymbol{x}(i)$.

Specifically, the geodesic line of manifold-based channel estimation under the Lq metric may be understood as that two known channel vectors and a channel vector between the two known channel vectors are located on one geodesic line. More specifically, the two known channel vectors and the channel vector between the two known channel vectors have a same origin (starting point), and end points of the two known channel vectors and an end point of the channel vector between the two known channel vectors fall on a same geodesic line. When a value of the parameter q varies, the geodesic line may be represented as a curve (or a straight line) with a corresponding bending degree.

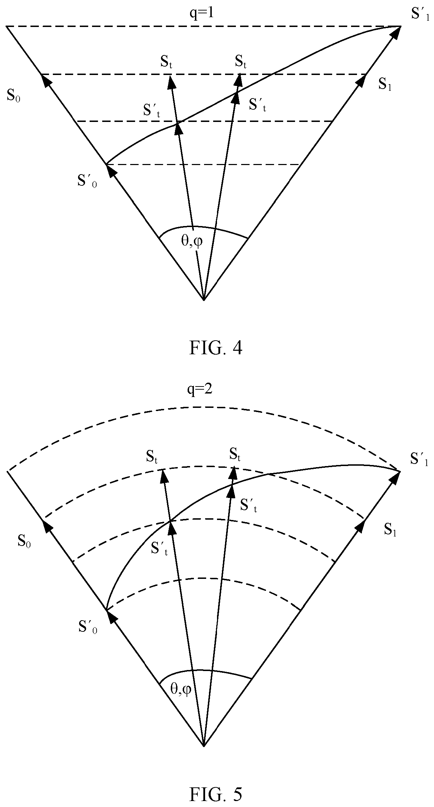

The following describes geodesic lines of manifold-based channel estimation with reference to FIG. 4 to FIG. 7. In FIG. 4 to FIG. 7, a channel vector $\boldsymbol{s}_0$ and a channel vector $\boldsymbol{s}_1$ are known channel vectors, and modulus lengths of the channel vector $\boldsymbol{s}_0$ and the channel vector $\boldsymbol{s}_1$ are 1. A channel vector $\boldsymbol{s'}_0$ and a channel vector $\boldsymbol{s'}_1$ are unnormalized channel vectors $\boldsymbol{s}_0$ and $\boldsymbol{s}_1$. For example, FIG. 4 is a diagram of a geodesic line of manifold-based channel estimation when a parameter q is 1. As shown in FIG. 4, a straight line (a dashed line in FIG. 4) between an end point of the channel vector $\boldsymbol{s}_0$ and an end point of the channel vector $\boldsymbol{s}_1$ is a geodesic line under a metric $L_1$. End points of channel vectors between the channel vector $\boldsymbol{s}_0$ and the channel vector $\boldsymbol{s}_1$ are all located on the straight line, and an end point of a channel vector $\boldsymbol{s'}_t$ between the channel vector $\boldsymbol{s'}_0$ and the channel vector $\boldsymbol{s'}_1$ falls on the straight line.

For example, FIG. 5 is a diagram of a geodesic line of manifold-based channel estimation when a parameter q is 2. As shown in FIG. 5, a curve line (a dashed line in FIG. 5) between an end point of the channel vector $\boldsymbol{s}_0$ and an end point of the channel vector $\boldsymbol{s}_1$ is a geodesic line under a metric $L_2$. End points of channel vectors between the channel vector $\boldsymbol{s}_0$ and the channel vector $\boldsymbol{s}_1$ are all located on the curve. An end point of a channel vector $\boldsymbol{s'}_t$ between the channel vector $\boldsymbol{s'}_0$ and the channel vector $\boldsymbol{s'}_1$ falls on the curve (in particular, an arc here).

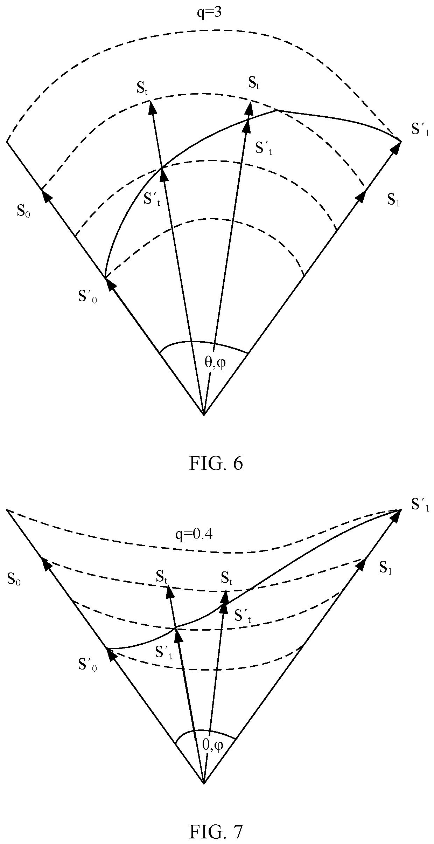

For example, FIG. 6 is a diagram of a geodesic line of manifold-based channel estimation when a parameter q is 3. As shown in FIG. 6, a curve line (a dashed line in FIG. 6) between an end point of the channel vector $\boldsymbol{s}_0$ and an end point of the channel vector $\boldsymbol{s}_1$ is a geodesic line under a metric $L_3$. End points of channel vectors between the channel vector $\boldsymbol{s}_0$ and the channel vector $\boldsymbol{s}_1$ are all located on the curve line, and an end point of a channel vector $\boldsymbol{s'}_t$ between the channel vector $\boldsymbol{s'}_0$ and the channel vector $\boldsymbol{s'}_1$ falls on the curve line.

For example, FIG. 7 is a diagram of a geodesic line of manifold-based channel estimation when a parameter q is 0.4. As shown in FIG. 7, a curve line (a dashed line in FIG. 7) between an end point of the channel vector $\boldsymbol{s}_0$ and an end point of the channel vector $\boldsymbol{s}_1$ is a geodesic line under a metric $L_{0.4}$. End points of channel vectors between the channel vector $\boldsymbol{s}_0$ and the channel vector $\boldsymbol{s}_1$ are all located on the curve line, and an end point of a channel vector $\boldsymbol{s'}_t$ between the channel vector $\boldsymbol{s'}_0$ and the channel vector $\boldsymbol{s'}_1$ falls on the curve line.

It should be understood that at least one piece of first information is in a one-to-one correspondence with at least one manifold-based channel estimation policy. In other words, different first information corresponds to different manifold-based channel estimation policies.

In a possible implementation, when the parameter q is 1, the first information indicates a manifold-based channel estimation policy #1.

Specifically, when the parameter q is 1, the manifold-based channel estimation policy #1 is to obtain a spatial included angle $\theta$ between two channel vectors (for example, $\boldsymbol{s}_0$ and $\boldsymbol{s}_1$) and a propagation rotation included angle $\varphi$ between the two channel vectors (for example, $\boldsymbol{s}_0$ and $\boldsymbol{s}_1$) based on the channel vector $\boldsymbol{s}_0$ and the channel vector $\boldsymbol{s}_1$ according to the following formulas (1) and (2). Further, interpolated channel vectors $\boldsymbol{s}_t$ and $\boldsymbol{s'}_t$ between $\boldsymbol{s}_0$ and $\boldsymbol{s}_1$ are calculated according to formulas (3) and (4) to complete channel estimation. Specific formulas are as follows:

$$\theta = \mathrm{acos}\left(\left|s_0^{\mathrm{H}} s_1\right|\right) \qquad (1);$$

$$\varphi = \mathrm{atan}\left(\frac{\mathrm{Im}\left(s_0^{\mathrm{H}} s_1\right)}{\mathrm{Re}\left(s_0^{\mathrm{H}} s_1\right)}\right) \qquad (2);$$

$$\boldsymbol{s}_t = \left(\boldsymbol{s}_0 + \left(e^{-\mathrm{j}\varphi} \cdot \boldsymbol{s}_1 - \boldsymbol{s}_0\right) \cdot \frac{\sin(t\cdot\theta)}{\sin(\omega + t\cdot\theta)} \cdot \frac{1}{\sqrt{2 - 2\cdot\cos(\theta)}}\right) \cdot e^{+\mathrm{j}\varphi\cdot t} \qquad (3);$$

and

$$\boldsymbol{s'}_t = \left(\left|\boldsymbol{s'}_0\right| + \left(\left|\boldsymbol{s'}_1\right| - \left|\boldsymbol{s'}_0\right|\right) \cdot t\right) \cdot \boldsymbol{s}_t \qquad (4).$$

$s_0^{\mathrm{H}}$ indicates that conjugate transposition is performed on $\boldsymbol{s}_0$.

In the formula (2), $\mathrm{Re}(s_0^H s_1)$ represents taking a real part of a complex number $s_0^H s_1$, and $\mathrm{Im}(s_0^H s_1)$ represents taking an imaginary part of the complex number $s_0^H s_1$.

In the formula (3), $\omega = \mathrm{asin}\left(\sin(\theta) \cdot \dfrac{1}{|e^{-j\varphi \cdot s_1 - s_0}|}\right)$.

$t$ is a relative position of a channel vector to be interpolated, and $0 \le t \le 1$.

For example, channel vectors on a first subcarrier and a thirteenth subcarrier are known, and are respectively denoted as $s'_0$ and $s'_1$. An objective is to estimate channel vectors on a second, third, ..., and eleventh subcarriers.

Assuming that $t = \dfrac{1}{12}, \dfrac{2}{12}, \cdots, \dfrac{11}{12}$, $s'_t$ may be used to represent the channel vectors on the second, the third, ..., and the eleventh subcarriers respectively.

In a possible implementation, when the parameter q is 2, the first information indicates a manifold-based channel estimation policy #2.

Specifically, when the parameter q is 2, the manifold-based channel estimation policy #2 is to obtain a spatial included angle $\theta$ between two channel vectors (for example, $s_0$ and $s_1$) and a propagation rotation included angle $\varphi$ between the two channel vectors (for example, $s_0$ and $s_1$) based on the channel vector $s_0$ and the channel vector $s_1$ according to the foregoing formulas (1) and (2). Further, interpolated channel vectors $s_t$ and $s'_t$ between $s_0$ and $s_1$ are calculated according to formulas (5) and (6) to complete channel estimation. Specific formulas (5) and (6) are as follows:

$$s_t = \left(s_0 \cdot \cos(t \cdot \theta) + \left(e^{-j\varphi} \cdot s_1 - s_0 \cdot \cos(\theta)\right) \cdot \frac{\sin(t \cdot \theta)}{\sin(\theta)}\right) \cdot e^{+j\varphi \cdot t} \quad (5);$$

and

$$s'_t = \left(|s'_0| + (|s'_1| - |s'_0|) \cdot t\right) \cdot s_t \quad (6).$$

$t$ is a relative position of a channel vector to be interpolated, and $0 \le t \le 1$.

In a possible implementation, when the parameter q is 3, the first information indicates a manifold-based channel estimation policy #3.

Specifically, when the parameter q is 3, the manifold-based channel estimation policy #3 is to obtain a spatial included angle $\theta$ between two channel vectors (for example, $s_0$ and $s_1$) and a propagation rotation included angle $\varphi$ between the two channel vectors (for example, $s_0$ and $s_1$) based on the channel vector $s_0$ and the channel vector $s_1$ according to the foregoing formulas (1) and (2). Further, interpolated channel vectors $s_t$ and $s'_t$ between $s_0$ and $s_1$ are calculated according to formulas (7) and (8) to complete channel estimation. Specific formulas (7) and (8) are as follows:

$$s_t = \frac{r}{|r|} \cdot \sqrt[3]{cos^3\left(\frac{\pi}{2}t\right) + sin^3\left(\frac{\pi}{2}t\right)} \cdot e^{+j\varphi \cdot t} \quad (7);$$

and

$$s'_t = \left(|s'_0| + (|s'_1| - |s'_0|) \cdot t\right) \cdot s_t \quad (8).$$

In the formula (7), $r = s_0 + \left(e^{-j\varphi} \cdot s_1 - s_0\right) \cdot \dfrac{sin(t \cdot \theta)}{sin\left(asin\left(sin(\theta) \cdot \frac{1}{|e^{-j\varphi \cdot s_1 - s_0}|}\right) + t \cdot \theta\right)} \cdot \dfrac{1}{\sqrt{2 - 2 \cdot cos(\theta)}}$.

It should be noted that the content of the manifold-based channel estimation policy when the parameter q has different values is merely an example, and this is not limited in this application. It should be noted that for details about how the network device determines the first information based on the channel state, refer to the related descriptions in step 210. The following describes a process in which the network device determines the first information based on the channel state with reference to an example.

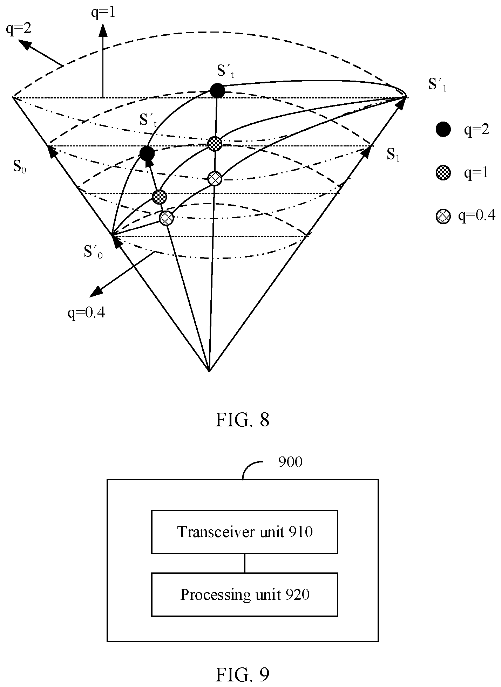

As shown in FIG. 8, the network device knows channel vectors $s_0$ and $s_1$, channel vectors $s'_0$ and $s'_1$, and a channel vector $s'_t$ between the channel vector $s'_0$ and the channel vector $s'_1$ (it is assumed that the channel vector $s'_t$ known by the network device is a channel vector $s'_t$ when q=2). The network device determines, based on the manifold-based channel estimation policy #1 corresponding to q=1, the channel vector $s'_t$ when q=1, and determines, based on a manifold-based channel estimation policy #4 corresponding to q=0.4, the channel vector $s'_t$ when q=0.4. Further, if the network device determines that an error (for example, a mean square error) between the channel vector $s'_t$ when q=2 and the channel vector $s'_t$ when q=1 is 0.5, and determines that an error (for example, a mean square error) between the channel vector $s'_t$ when q=2 and the channel vector $s'_t$ when q=0.4 is 0.8, the network device determines that q=1, that is, the first information indicates the manifold-based channel estimation policy #1.

340: The network device sends the first information to the terminal device.

Correspondingly, the terminal device receives the first information from the network device.

In a possible implementation, the network device sends the first information through downlink control information (downlink control information, DCI) to the terminal device.

In a possible implementation, the network device sends the first information through medium access control-control information (medium access control-control element, MAC-CE) or radio resource control (radio resource control, RRC) signaling to the terminal device.

In a possible implementation, the network device stores the first information in a preconfigured default value.

350: The terminal device learns of a DMRS pattern (pattern).

The DMRS pattern indicates a location of a corresponding time-frequency resource that can be used to transmit a DMRS. In other words, the DMRS pattern indicates a location of a corresponding time-frequency resource that may be used to transmit a DMRS.

In a possible implementation, the network device sends an indication of the DMRS pattern to the terminal device, that is, the terminal device receives the indication of the DMRS pattern from the network device.

360: The network device sends the DMRS to the terminal device.

Correspondingly, the terminal device receives the DMRS from the network device.

It should be understood that, after the terminal device learns of the DMRS pattern in 350 and receives the DMRS in 360, the terminal device can obtain, based on the DMRS pattern and the DMRS, a channel vector on a subcarrier on which the DMRS pattern is located, namely, the channel vector $s_0$ and the channel vector $s_1$.

It should be noted that for a manner in which the terminal device obtains the channel vector $s_0$ and the channel vector $s_1$ based on the DMRS pattern and the DMRS, refer to the conventional technology. This is not limited in this application.

It should be noted that a sequence of 340, 350, and 360 is not limited in this application. For example, 340, 350, and 360 may be sequentially performed; 340 may be first performed, and then 350 and 360 are simultaneously performed; or 350 may be first performed, and then 340 and 360 are simultaneously performed.

370: The terminal device determines a manifold-based channel estimation policy based on the first information.

In a possible implementation, the terminal device stores a correspondence between the first information and the manifold-based channel estimation policy. After receiving the first information, the terminal device determines, based on the first information and the correspondence, the manifold-based channel estimation policy corresponding to the received first information.

For example, when a parameter q in the first information is 2, the terminal device determines, based on the first information and the correspondence, that the manifold-based channel estimation policy is a manifold-based channel estimation policy #2.

380: The terminal device performs channel estimation based on the manifold-based channel estimation policy.

In a possible implementation, after determining the manifold-based channel estimation policy in 370, the terminal device performs channel estimation based on the policy.

For example, when the terminal device determines, in 370, that the first information corresponds to the manifold-based channel estimation policy #2, the terminal device performs channel estimation based on the manifold-based channel estimation policy #2.

Optionally, 390: The terminal device performs MIMO channel equalization.

Specifically, the terminal device performs MIMO channel equalization based on a channel estimation result, to improve transmission performance of a system.

It should be noted that for a manner in which the terminal device performs MIMO channel equalization, refer to related technologies of channel equalization in the conventional technology. This is not limited in this application.

Based on the foregoing solution, the manifold-based channel estimation policy is determined based on the channel state, so that channel estimation can be flexibly performed based on different channel states, and channel estimation performance can be improved.

It may be understood that the examples in FIG. 2 to FIG. 8 in embodiments of this application are merely intended to help a person skilled in the art understand embodiments of this application, but are not intended to limit embodiments of this application to specific scenarios in the examples. It is clear that a person skilled in the art can make various equivalent modifications or variations to the examples in FIG. 2 to FIG. 8, and such modifications or variations also fall within the scope of embodiments of this application.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names, such as the first information or the capability information, are involved in embodiments of this application. It should be understood that the names do not limit the protection scope of embodiments of this application.

It may be further understood that in this specification, the term "and/or" describes only an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

It may be further understood that, in the foregoing method embodiments, the method and the operation implemented by the first device may also be implemented by a component (for example, a chip or a circuit) of the first device. In addition, the method and the operation implemented by a second device may also be implemented by a component (for example, a chip or a circuit) of the second device. This is not limited. In correspondence to the methods provided in the foregoing method embodiments, embodiments of this application further provide corresponding apparatuses. The apparatus includes corresponding modules configured to perform the foregoing method embodiments. The module may be software, hardware, or a combination of the software and the hardware. It may be understood that the technical features described in the method embodiments are also applicable to the following apparatus embodiments.

It should be understood that the first device and the second device may perform a part or all of steps in the foregoing embodiments. These steps or operations are merely examples. In embodiments of this application, other operations or variations of various operations may be further performed. In addition, the steps may be performed in another sequence different from that presented in the foregoing embodiments, and not all the operations in the foregoing embodiments may be performed.

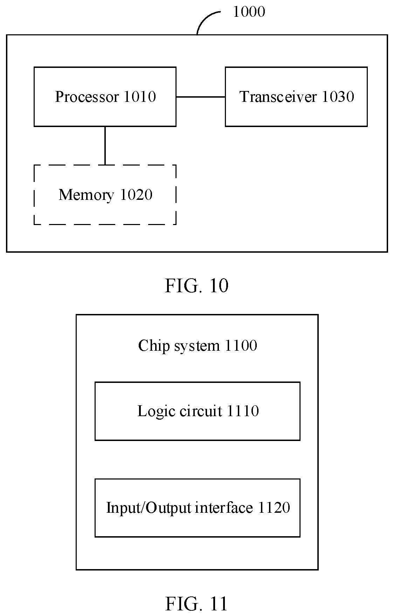

The foregoing describes, in detail with reference to FIG. 2 to FIG. 8, the channel estimation method provided in embodiments of this application. The following describes, in detail with reference to FIG. 9 and FIG. 11, communication apparatuses provided in embodiments of this application. It should be understood that descriptions of apparatus embodiments correspond to the descriptions of the method embodiments. Therefore, for content that is not described in detail, refer to the foregoing method embodiments. For brevity, some content is not described again.

FIG. 9 is a block diagram of a communication apparatus according to an embodiment of this application. An apparatus 900 includes a transceiver unit 910 and a processing unit 920. The transceiver unit 910 may be configured to implement a corresponding communication function. The processing unit 920 may be configured to process data. In other words, the transceiver unit 910 is configured to perform operations related to receiving and sending, and the processing unit 920 is configured to perform an operation other than receiving and sending. The transceiver unit 910 may be further referred to as a communication interface or a communication unit.

Optionally, the apparatus 900 further includes a storage unit. The storage unit may be configured to store instructions and/or data. The processing unit 920 may read the instructions and/or the data in the storage unit, to enable the apparatus to implement actions of different devices in the foregoing method embodiments, for example, actions of a first device or actions of a second device. The apparatus 900 may be configured to perform actions performed by the first device or the second device in the foregoing method embodiments. In this case, the apparatus 900 may be the first device or the second device, or a component of the first device or the second device. The transceiver unit 910 is configured to perform receiving/sending-related operations of the first device or the second device in the foregoing method embodiments, and the processing unit 920 is configured to perform processing-related operations of the first device or the second device in the foregoing method embodiments.

In a possible implementation, the transceiver unit 910 is further configured to receive first information. The processing unit 920 is configured to determine a manifold-based channel estimation policy based on the first information.

In another possible implementation, the processing unit 920 is configured to determine the first information based on a channel state. The transceiver unit 910 is configured to send the first information. It should be further understood that the apparatus 900 herein is embodied in a form of functional units.

The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the first device or the second device in the foregoing embodiments, and may be configured to perform the procedures and/or steps corresponding to the first device or the second device in the foregoing method embodiments. Alternatively, the apparatus 900 may be specifically the first device or the second device in the foregoing embodiments, and may be configured to perform the procedures and/or steps corresponding to the first device or the second device in the foregoing method embodiments. To avoid repetition, details are not described herein again.

The apparatus 900 in the foregoing solutions has a function of implementing corresponding steps performed by the first device or the second device in the foregoing methods, or the apparatus 900 in the foregoing solutions has a function of implementing corresponding steps performed by the first device or the second device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform a receiving/sending operation and a related processing operation in the method embodiments.

In addition, the transceiver unit 910 may alternatively be a transceiver circuit (for example, may include a receiver circuit and a transmitter circuit), and the processing unit may be a processing circuit.

It should be noted that the apparatus in FIG. 9 may be the network element or the device in the foregoing embodiments, or may be a chip or a chip system, for example, a system-on-a-chip (system-on-a-chip, SoC). The transceiver unit may be an input/output circuit or a communications interface. The processing unit is a processor, a microprocessor, or an integrated circuit integrated on the chip. This is not limited herein.

FIG. 10 shows another communication apparatus 1000 according to an embodiment of this application. The apparatus 1000 includes a processor 1010. The processor 1010 is coupled to a memory 1020. The memory 1020 is configured to store a computer program or instructions and/or data. The processor 1010 is configured to: execute the computer program or the instructions stored in the memory 1020, or read data stored in the memory 1020, to perform the method in the foregoing method embodiments. The apparatus 1000 further includes a transceiver 1030, and the transceiver 1030 is configured to receive and/or send a signal. For example, the processor 1010 is configured to control the transceiver 1030 to receive and/or send a signal.

Optionally, there are one or more processors 1010.

Optionally, there are one or more memories 1020.

Optionally, the memory 1020 and the processor 1010 are integrated together, or are disposed separately.

In a solution, the apparatus 1000 is configured to implement operations performed by the first device or the second device in the foregoing method embodiments.

For example, the processor 1010 is configured to execute a computer program or an instruction stored in the memory 1020, to implement related operations of the first device in the foregoing method embodiments. For example, the method implemented by the first device in any one of the embodiments shown in FIG. 2 to FIG. 8, or the method implemented by the first device in any one of the embodiments shown in FIG. 2 to FIG. 5.

For example, the processor 1010 is configured to execute a computer program or an instruction stored in the memory 1020, to implement related operations of the second device in the foregoing method embodiments. For example, the method implemented by the second device in any one of the embodiments shown in FIG. 2 to FIG. 8, or the method implemented by the second device in any one of the embodiments shown in FIG. 2 to FIG. 5.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should further be noted that the memory described herein is intended to include, but is not limited to, these and any other appropriate type of memory.

As shown in FIG. 11, an embodiment of this application provides a chip system 1100. The chip system 1100 (or may also be referred to as a processing system) includes a logic circuit 1110 and an input/output interface (input/output interface) 1120.

The logic circuit 1110 may be a processing circuit in the chip system 1100. The logic circuit 1110 may be coupled to and connected to a storage unit, and invoke instructions in the storage unit, so that the chip system 1100 can implement methods and functions in embodiments of this application. The input/output interface 1120 may be an input/output circuit in the chip system 1100, and outputs information processed by the chip system 1100, or inputs to-be-processed data or signaling information into the chip system 1100 for processing.

In a solution, the chip system 1100 is configured to implement operations performed by the first device or the second device in the foregoing method embodiments.

For example, the logic circuit 1110 is configured to implement a processing-related operation of the first device in the foregoing method embodiments, for example, a processing-related operation of the first device in any one of the embodiments shown in FIG. 2 to FIG. 8. The input/output interface 1120 is configured to implement a sending and/or receiving-related operation performed by the first device in the foregoing method embodiments, for example, a sending and/or receiving-related operation performed by the first device in any one of the embodiments shown in FIG. 2 to FIG. 8.

For example, the logic circuit 1110 is configured to implement a processing-related operation of the second device in the foregoing method embodiments, for example, a processing-related operation of the second device in any one of the embodiments shown in FIG. 2 to FIG. 5. The input/output interface 1120 is configured to implement a sending and/or receiving-related operation performed by the second device in the foregoing method embodiments, for example, a sending and/or receiving-related operation performed by the second device in any one of the embodiments shown in FIG. 2 to FIG. 8.

An embodiment of this application further provides a computer-readable storage medium. The computer-readable storage medium stores computer instructions used to implement the method performed by the first device or the second device in the foregoing method embodiments.

For example, when a computer program is executed by a computer, the computer is enabled to implement the method performed by the first device or the second device in the foregoing method embodiments.

An embodiment of this application further provides a computer program product, including instructions. When the instructions are executed by a computer, the method performed by the first device or the second device in the foregoing method embodiments is implemented.

For explanations and beneficial effects of related content in any one of the apparatuses provided above, refer to the corresponding method embodiments provided above. Details are not described herein again.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel estimation method, comprising:

   receiving first information, wherein the first information indicates a manifold-based channel estimation policy, the first information is associated with a channel state corresponding to a channel used to transmit a reference signal, and the reference signal is used for channel estimation; and
   determining the manifold-based channel estimation policy based on the first information.

2. The method according to claim 1, wherein the method further comprises:
   sending capability information, wherein the capability information indicates that a first device has a manifold-based channel estimation capability.

3. The method according to claim 1 or 2, wherein the first information is in a one-to-one correspondence with a channel vector group in frequency domain, the reference signal corresponds to at least one channel vector group, and the channel vector group comprises at least two vectors; and/or
   the first information is in a one-to-one correspondence with a port corresponding to the reference signal in space domain.

4. The method according to any one of claims 1 to 3, wherein the manifold-based channel estimation policy is used to determine at least one interpolated channel vector corresponding to the reference signal.

5. The method according to any one of claims 1 to 4, wherein at least one piece of first information is in a one-to-one correspondence with at least one manifold-based channel estimation policy.

6. The method according to any one of claims 1 to 5, wherein the method further comprises:
   performing channel estimation based on the manifold-based channel estimation policy.

7. The method according to claim 6, wherein performing the channel estimation based on the manifold-based channel estimation policy comprises:

   determining a first channel vector and a second channel vector based on a reference signal pattern and the reference signal, wherein the reference signal pattern indicates a location of a time-frequency resource that is available for transmitting the reference signal; and

determining at least one interpolated channel vector based on the first channel vector, the second channel vector, and the manifold-based channel estimation policy.

8. A channel estimation method, comprising:

   determining first information based on a channel state, wherein the channel state is a channel state corresponding to a channel used to transmit a reference signal, the reference signal is used for channel estimation, and the first information indicates a manifold-based channel estimation policy; and
   sending the first information.

9. The method according to claim 8, wherein the method further comprises:
   receiving capability information, wherein the capability information indicates that a first device has a manifold-based channel estimation capability.

10. The method according to claim 8 or 9, wherein determining the first information based on the channel state comprises:

    determining the first information in frequency domain based on a channel state corresponding to a channel vector group, wherein the reference signal corresponds to at least one channel vector group, the channel vector group comprises at least two vectors, and the channel vector group is in a one-to-one correspondence with the first information; and/or
    determining the first information in space domain based on a channel state corresponding to a port corresponding to at least one reference signal, wherein the port of the reference signal is in a one-to-one correspondence with the first information.

11. The method according to any one of claims 8 to 10, wherein the manifold-based channel estimation policy is used to determine at least one interpolated channel vector corresponding to the reference signal.

12. The method according to any one of claims 8 to 11, wherein at least one piece of first information is in a one-to-one correspondence with at least one manifold-based channel estimation policy.

13. A communication apparatus, comprising:

    a transceiver unit, configured to receive first information, wherein the first information indicates a manifold-based channel estimation policy, the first information is associated with a channel state corresponding to a channel used to transmit a reference signal, and the reference signal is used for channel estimation; and
    a processing unit, configured to determine the manifold-based channel estimation policy based on the first information.

14. The apparatus according to claim 13, wherein the communication apparatus further comprises:
    the transceiver unit, further configured to send capability information, wherein the capability information indicates that the communication apparatus has a manifold-based channel estimation capability.

15. The apparatus according to claim 13 or 14, wherein the first information is in a one-to-one correspondence with a channel vector group in frequency domain, the reference signal corresponds to at least one channel vector group, and the channel vector group comprises at least two vectors; and/or
    the first information is in a one-to-one correspondence with a port corresponding to the reference signal in space domain.

16. The apparatus according to any one of claims 13 to 15, wherein the manifold-based channel estimation policy is used to determine at least one interpolated channel vector corresponding to the reference signal.

17. The apparatus according to any one of claims 13 to 16, wherein at least one piece of first information is in a one-to-one correspondence with at least one manifold-based channel estimation policy.

18. The apparatus according to any one of claims 13 to 17, wherein the communication apparatus further comprises:
    the processing unit, further configured to perform channel estimation based on the manifold-based channel estimation policy.

19. The apparatus according to claim 18, wherein the processing unit is further configured to determine a first channel vector and a second channel vector based on a reference signal pattern and the reference signal, wherein the reference signal pattern indicates a location of a time-frequency resource that is available for transmitting the reference signal; and

the processing unit is further configured to determine at least one interpolated channel vector based on the first channel vector, the second channel vector, and the manifold-based channel estimation policy.

20. A communication apparatus, comprising:

a processing unit, configured to determine first information based on a channel state, wherein the channel state is a channel state corresponding to a channel used to transmit a reference signal, the reference signal is used for channel estimation, and the first information indicates a manifold-based channel estimation policy; and

a transceiver unit, configured to send the first information.

21. The apparatus according to claim 20, wherein the communication apparatus further comprises:
the transceiver unit, further configured to receive capability information, wherein the capability information indicates that a first device has a manifold-based channel estimation capability.

22. The apparatus according to claim 20 or 21, wherein the processing unit is further configured to determine the first information in frequency domain based on a channel state corresponding to a channel vector group, wherein the reference signal corresponds to at least one channel vector group, the channel vector group comprises at least two vectors, and the channel vector group is in a one-to-one correspondence with the first information; and/or

the processing unit is further configured to determine the first information in space domain based on a channel state corresponding to a port corresponding to at least one reference signal, wherein the port of the reference signal is in a one-to-one correspondence with the first information.

23. The apparatus according to any one of claims 20 to 22, wherein the manifold-based channel estimation policy is used to determine at least one interpolated channel vector corresponding to the reference signal.

24. The apparatus according to any one of claims 20 to 23, wherein at least one piece of first information is in a one-to-one correspondence with at least one manifold-based channel estimation policy.

25. A communication system, comprising a first device and a second device, wherein the first device is configured to perform the method according to any one of claims 1 to 7, and the second device is configured to perform the method according to any one of claims 8 to 12.

26. A communication apparatus, comprising:
a processor, configured to execute a computer program stored in a memory, so that the communication apparatus performs the method according to any one of claims 1 to 12.

27. A computer-readable storage medium, wherein the computer-readable storage medium stores a computer program or instructions, and when the computer program or the instructions are executed by a processor, the method according to any one of claims 1 to 12 is performed.

28. A computer program product comprising instructions, wherein when the computer program product runs on a computer, the method according to any one of claims 1 to 12 is performed.

29. A chip system, comprising a processor, configured to: invoke a computer program or instructions from a memory and run the computer program or the instructions, so that a communication apparatus in which the chip system is installed implements the method according to any one of claims 1 to 12.

FIG. 1

FIG. 2

300

```
┌──────────────────┐                              ┌──────────────────┐
│  Terminal device │                              │  Network device  │
└──────────────────┘                              └──────────────────┘
```

———— S310: Capability information ————▶

S320: Determine a channel state

S330: Determine first information based on the channel state

◀———— S340: First information ————

S350: The terminal device learns of a DMRS pattern

◀———— S360: DMRS ————

S370: Determine a manifold-based channel estimation policy based on the first information

S380: Perform channel estimation based on the manifold-based channel estimation policy

S390: Perform MIMO channel equalization

FIG. 3

FIG. 4

FIG. 5

FIG. 6

FIG. 7

FIG. 8

FIG. 9

1000

| Processor 1010 | | Transceiver 1030 |

Memory 1020

FIG. 10

Chip system 1100

Logic circuit 1110

Input/Output interface 1120

FIG. 11

## INTERNATIONAL SEARCH REPORT

| International application No. |
|---|
| **PCT/CN2023/116301** |

| A. | CLASSIFICATION OF SUBJECT MATTER |
|---|---|

H04L25/02(2006.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, VCN, DWPI, CNKI, IEEE, 3GPP: 信道, 估计, 状态, 向量, 矢量, 策略, 流式, 参考信号, 插值, 误差, 不同, 灵活, 测地线, channel, estimat+, state, vector, policy, flow, RS, interpolation

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113228577 A (BEIJING XIAOMI MOBILE SOFTWARE CO., LTD.) 06 August 2021 (2021-08-06)<br>claims 35-38, and description, paragraphs 0264-0357 | 1, 6, 8, 13, 18, 20, 25-29 |
| A | CN 110113084 A (NANJING FORESTRY UNIVERSITY) 09 August 2019 (2019-08-09)<br>entire document | 1-29 |
| A | CN 115277316 A (HANGZHOU DIANZI UNIVERSITY) 01 November 2022 (2022-11-01)<br>entire document | 1-29 |
| A | WO 2012116487 A1 (NEC (CHINA) CO., LTD.) 07 September 2012 (2012-09-07)<br>entire document | 1-29 |
| A | 王鹏等 (WANG, Peng et al.). "基于复Grassmann 流形的毫米波MIMO信道估计方案 (Non-official translation: Millimeter-Wave MIMO Channel Estimation Scheme Based on Complex Grassmann Manifold)"<br>江苏通信 (Jiangsu Communication), No. 3, 30 June 2023 (2023-06-30),<br>entire document | 1-29 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 April 2024** | **08 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116301**

| Patent document cited in search report | | | Publication date (day/month/year) | Patent family member(s) | | | Publication date (day/month/year) |
|---|---|---|---|---|---|---|---|
| CN | 113228577 | A | 06 August 2021 | WO | 2022205372 | A1 | 06 October 2022 |
| | | | | KR | 20230163521 | A | 30 November 2023 |
| | | | | IN | 202347074269 | A | 08 December 2023 |
| | | | | EP | 4319037 | A1 | 07 February 2024 |
| | | | | JP | 2024511536 | A | 13 March 2024 |
| CN | 110113084 | A | 09 August 2019 | None | | | |
| CN | 115277316 | A | 01 November 2022 | None | | | |
| WO | 2012116487 | A1 | 07 September 2012 | US | 2013343481 | A1 | 26 December 2013 |
| | | | | CN | 103299570 | A | 11 September 2013 |

Form PCT/ISA/210 (patent family annex) (July 2022)